# EUROPÄISCHE PATENTSCHRIFT

(11) **EP 1 782 670 B1**
(45) Veröffentlichungstag und Bekanntmachung des Hinweises auf die Patenterteilung: **13.05.2009**
(21) Anmeldenummer: 06022923.4
(22) Anmeldetag: 03.11.2006
(51) Int. Cl.: A01C 17/00

(54) **Getriebeanordnung für landwirtschaftliches Gerät, insbesondere Düngerstreuer**
Power transmission arrangement for an agricultural apparatus, in particular for a fertilizer spreader
Ensemble de transmission pour machines agricoles, particulièrement pour un épandeur d'engrais

(30) Priorität: 04.11.2005 DE 102005053039
(43) Veröffentlichungstag der Anmeldung: 09.05.2007
(73) Patentinhaber: Rögelberg Holding GmbH & Co. KG, 49716 Meppen (DE)
(72) Erfinder: Seggerring, Manfred, 49744 Geeste-Dalüm (DE); Süclmann, Anton, 49716 Meppen (DE)
(74) Vertreter: Bünemann, Egon

(56) Entgegenhaltungen:
- EP-A2- 0 314 636
- WO-A-85/01335
- DE-A1-3102004 014 03
- DE-A1-0102005 015 69

## Beschreibung

Die Erfindung betrifft eine Getriebeanordnung für insbesondere landwirtschaftliche Geräte nach dem Oberbegriff des Anspruchs 1. Damit sollen ausgehend von einem Antrieb mehrere anzutreibende Werkzeuge angetrieben werden, wobei die Werkzeuge teilweise unterschiedliche Antriebsdrehzahlen haben müssen. Dies ist insbesondere bei Düngerstreuern von Bedeutung. Sogenannte Schleuderstreuer zum Anbau an einen Traktor haben meist zwei mit Abstand voneinander angeordnete Wurfscheiben, denen das Streugut in einstellbarer Menge zuführbar ist. Eine der Wurfscheiben soll mit geringerer Drehzahl als die andere(n) antreibbar sein, um ein Grenzstreuen zu ermöglichen.

Derartige Düngerstreuer sind z.B. aus der DE 198 56 525 A1 bekannt. Nachteilig bei dem dort beschriebenen Getriebe ist jedoch, daß es nur im Stillstand geschaltet werden kann. Als weiterer Stand der Technik ist die DE 199 29 356 C2 zu nennen.
Bei der dortigen Getriebeanordnung funktioniert die Drehzahlanpassung über Reibräder oder einen Riemenantrieb. Beides muß jedoch zur Änderung der Drehzahl von Hand angepaßt werden. Der Traktorführer muß daher von seinem Gerät heruntersteigen, um eine veränderte Drehzahl festlegen zu können.

In der DE 10 2004 014 033 A1 wird bereits ein Schleuderdüngerstreuer beschrieben, der ein stufenloses Lastschaltgetriebe in Form eines Umschlingungsgetriebes aufweist. Diese Art der Schaltung ist wenig präzise, so daß das Bedienpersonal mit der Schaltung sehr gut vertraut sein muß, um optimale Streuergebnisse zu erzielen.

Der Erfindung legt die Aufgabe zugrunde, eine Getriebeanordnung zu schaffen, deren Bedienkomfort erhöht ist.

Diese Aufgabe wird durch eine Getriebeanordnung mit den Merkmalen des Anspruchs 1 gelöst. Durch die Verwendung eines Stufengetriebes ist eine präzise Schaltung und Anwahl der Gänge möglich. Um einerseits verschiedene Streustufen zu ermöglichen, andererseits jedoch den Aufbau des Getriebes einfach und kompakt zu halten, wird erfindungsgemäß ein Getriebe mit mindestens zwei durch Lamellenkupplungen gebildeten Gänge verwendet. Der dritte Gang wird dadurch verwirklicht, daß die verwendete Schaltvorrichtung eine Freiposition einnehmen kann, in der keine der beiden vorgenannten Kupplungen im Eingriff ist, sondern ein Freilauf zum Tragen kommt. Bei diesem Aufbau sind Fehlbedienungen im wesentlichen ausgeschlossen, so daß auch die Reparaturanfälligkeit sinkt. Diese kann noch weiter herabgesetzt werden, wenn wie bevorzugt angegeben Überlastsicherungen insbesondere für jede Getriebestufe und jeden Abtrieb eingesetzt werden.

Weitere Vorteile und Einzelheiten ergeben sich aus den Unteransprüchen und einem in den Zeichnungen dargestellten Ausführungsbeispiel, das im folgenden beschrieben wird; es zeigen:
- Fig. 1: den Zentralbereich der Getriebeanordnung in Übersichtsdarstellung und
- Fig. 2: eine Detailvergrößerung des Gegenstands aus Fig. 1.

Die gezeigte Getriebeanordnung hat eine als Kegelritzelwelle ausgebildete Antriebswelle 1, die beispielsweise an die Zapfwelle eines Traktors anschließbar ist. Über die Antriebswelle 1 wird eine Übertragungswelle 2 angetrieben und von dieser aus zwei Abtriebswellen 3, 4. Die Abtriebswelle 3 führt zur Schleuderscheibe I, die sie über ein Winkelgetriebe antreibt. Die Antriebswelle 4 führt zur Schleuderscheibe II, ebenfalls über ein Winkelgetriebe.

Um die Schleuderscheibe I mit unterschiedlichen Drehzahlen antreiben zu können, ist die Abtriebswelle 3 über eine Verbindungsmuffe 5 drehfest und fluchtend mit einer Schaltwelle 6 verbunden, die Teil einer Zwischenwellenanordnung 2, 6 ist. Auf der Schaltwelle 6 sind drei Stirnräder 21, 22 und 23 angeordnet, die mit korrespondierenden Stirnrädern 11, 12 und 13 der Übertragungswelle 2 kämmen. Die Stirnräder 21 und 22 sind auf der Schaltwelle 6 drehbar gelagert und können über Lamellenkupplungen bzw. Lamellenpakete 31, 32 mit Mitnahmeflanschen 41, 42 in Eingriff gebracht werden. Diese Lamellenscheibenkupplungen 31, 32 haben wesentliche Vorteile gegenüber anderen Verbindungsarten. Zum einen sind sie unter Last schaltbar und zum anderen stellen sie gleichzeitig eine Überlastsicherung dar. Sollte die Abtriebswelle 3 durch äußere Einflüsse blockieren oder hohen Anlaufstößen ausgesetzt sein, würde eine sich etwa im Eingriff befindende Lamellenkupplung 31 oder 32 durchrutschen, so daß keine Beschädigung der Getriebeanordnung oder sogar des Traktorantriebs aufträte.

Die Schaltung zwischen Gang I und Gang II für die Schleuderscheibe I erfolgt auf besonders einfache aber wirkungsvolle Weise über eine erfindungsgemäße Schaltvorrichtung, die ein als Schaltring 7 ausgebildetes Schaltelement mit abgeschrägten Flanken 8 aufweist. Über diese Flanken 8 kann der Schaltring 7 kraftarm Schaltkugeln 9 an einer gegenüber der Schaltrichtung, symbolisiert durch Pfeil S, geneigten Fläche bzw. Schräge 15 herunter und damit in Richtung auf das jeweils zum Eingriff zu bringende Lamellenpaket 31 oder 32 drücken. Eine geneigte Fläche 15 im Sinne der Erfindung ist dabei auch eine Fläche, deren Neigung wie im Ausführungsbeispiel dargestellt als - vorzugsweise der Kugelkontur angepaßte - Wölbung ausgebildet ist.

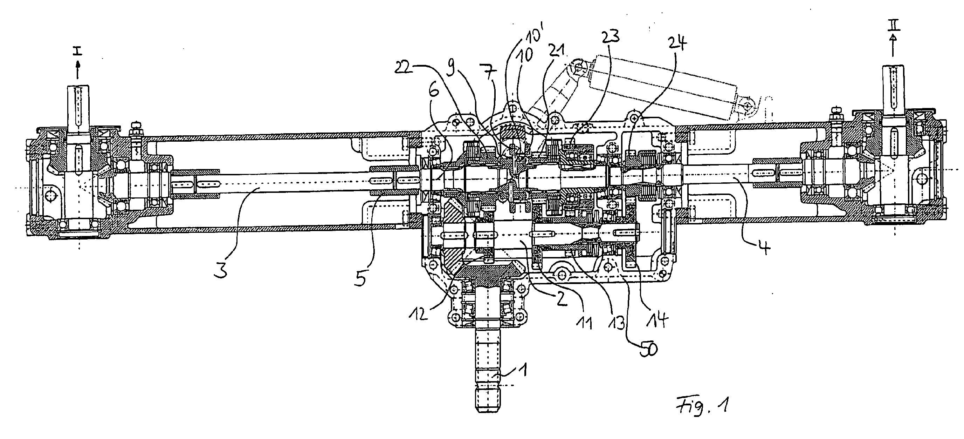

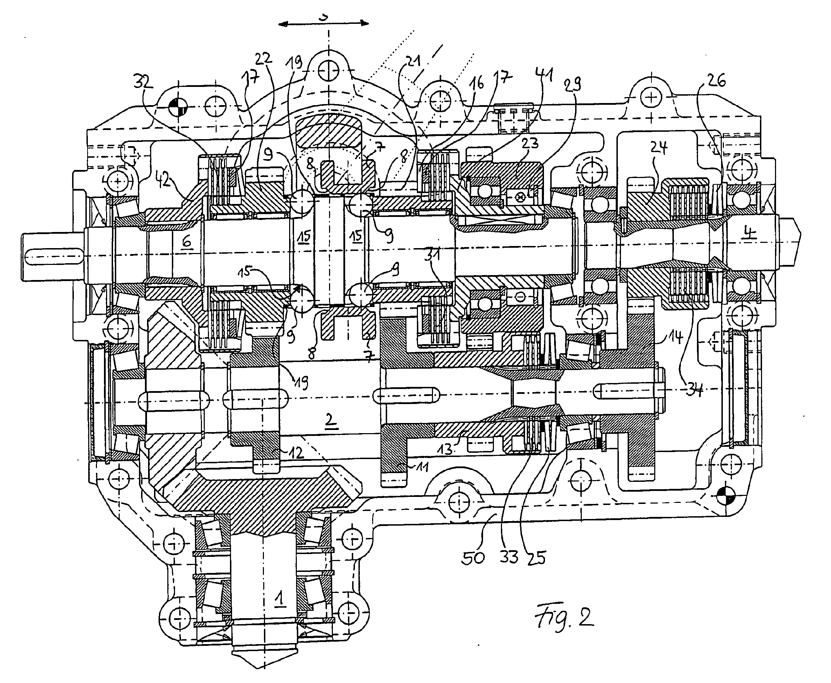

In Fig. 1 ist die Schaltvorrichtung teilweise von einer Paßfeder 10 und Stiften 10' verdeckt, die in Fig. 2 zur Verbesserung der Übersichtlichkeit nicht dargestellt sind. In der in den Figuren dargestellten Schaltposition gelangt dadurch das Stirnrad 21 über eine Tellerfeder 16 und eine Stützscheibe 17 in Andruck mit dem Lamellenpaket 31 und ist so kraftschlüssig mit dem Mitnahmeflansch 41 verbunden. Bei der dargestellten Ausführungsform wird daher durch die Lamellenpakete 31, 32 sowohl das Lastschaltgetriebe als auch eine Überlastsicherung verwirklicht.

Damit die Schaltkugeln 9 auf der jeweils anderen Seite (bei der hier dargestellten Abbildung links), auf der sich der Schaltring 7 gerade nicht befindet, nicht herausfallen, sind sämtliche Schaltkugeln 9 durch ein Halteelement in Gestalt einer Haltehülse 19 gesichert.

Die dargestellte Schaltung wird über weitere, punktiert angedeutete Schaltelemente aus der Getriebeanordnung herausgeführt, so daß sie vom Führerstand des Traktors aus geschaltet werden kann. Sie hat durch die besondere Anordnung von Schaltring 7, Laufschrägen 8 und 15 und Schaltkugeln 9 den Vorteil, daß eine einmal erreichte Schaltposition kraftlos beibehalten wird.

Die dargestellte Ausführungsform ermöglicht auf besonders einfache und kostengünstige Weise das zusätzliche Schalten eines Gangs III für die Schleuderscheibe I, indem das Stirnrad 13 der Übertragungswelle 2 mit dem Stirnrad 23 der Schaltwelle 6 kämmt, wobei das Stirnrad 23 einerseits drehbar auf der Schaltwelle 6 gelagert ist und andererseits mit dieser über einen Freilauf 29 verbunden ist. Bei der dargestellten Ausführungsform erfolgt diese Verbindung und die Lagerung besonders vorteilhaft und kompakt auf dem Mitnahmeflansch 41. Der Freilauf 29 ist so ausgelegt, daß er dann greift, wenn die Drehzahl der Schaltwelle 6 und der Abtriebswelle 3 unter den durch die Übersetzung der Stirnräder 13 und 23 vorgegebenen Wert sinkt. Bei höheren Drehzahlen, die im Gang I und Gang II anliegend, wird der Freilauf 29 einfach überholt. Der durch den Freilauf 29 verwirklichte Gang III kann geschaltet werden, indem der Schaltring 7 in eine Freiposition gebracht wird, die bei dem dargestellten Getriebe der Mittelposition zwischen den rechten und den linken Schaltkugeln 9 entspricht, so daß weder die Kupplung 31 noch die Kupplung 32 im Eingriff ist.

Um bei einem etwaigen Blockieren der Antriebswelle 3 oder hohen Anlaufstößen durch äußere Einwirkung auch diese Getriebestufe, d.h. den Freilauf 29 und nachfolgende Elemente, vor Beschädigungen zu schützen, ist das Stirnrad 13 nicht dauerhaft drehfest auf der Übertragungswelle 2 gelagert, sondern auf dieser drehbar angeordnet und mit der Übertragungswelle 2 über ein weiteres Lamellenpaket bzw. eine weitere Kupplung 33 kraftschlüssig verbunden. Diese Kupplung ist über Tellerfedern 25 vorgespannt. Kommt es bei drehender Antriebswelle 1 und geschaltetem Freilauf 29 zu einer Blockade der Antriebswelle 3, so übersteigt das anliegende Drehmoment das maximal durch die Kupplung 33 für den Freilauf 29 übertragbare Drehmoment und das Stirnrad 13 dreht auf der Übertragungswelle 2 durch. Diese Anordnung ermöglicht eine Überlastsicherung bzw. Absicherung der verwendeten Bauelemente auf eine besonders vorteilhafte und bisher nicht bekannte Art. Um auf eventuelle zusätzliche Absicherungen außerhalb der dargestellten Getriebeanordnung vollständig verzichten zu können, ist schließlich auch die Abtriebswelle 4 als Überlastsicherung mit einer separaten Kupplung mit Lamellenpaket 34 versehen, die ebenfalls über Tellerfedern 26 vorgespannt sind. Der Antrieb der Abtriebswelle 4, der über ein Stirnrad 14 auf der Übertragungswelle 2 und ein Stirnrad 24 auf der Abtriebswelle 4 erfolgt, kann so ebenfalls abgesichert werden. Das Stirnrad 24 ist wie das Stirnrad 13 nicht dauerhaft drehfest mit der Welle 4 verbunden, sondern erst über die Lamellenkupplung 34. Auch eine etwaige Blockade der Abtriebswelle 4 kann daher nicht zerstörend auf sensible Elemente der Getriebeanordnung oder auf die Übertragungswelle 2 durchschlagen.

Die Normalstellung der Getriebeanordnung ist Gang 1, da die Stirnräder 11 und 14 sowie 21 und 24 gleich groß sind und damit die Drehzahlen der Abtriebswellen 3 und 4 identisch sind.

Besonders vorteilhaft ist bei dem erfindungsgemäßen Getriebe darüber hinaus, daß sämtliche Kupplungen 31, 32, 33 und 34 innerhalb eines abgedichteten Getriebegehäuses 50 im Ölbad laufen können, so daß sie keinen Verschmutzungen ausgesetzt und dadurch nahezu wartungsfrei sind. Die gewählte Anordnung der Kupplungen 31 bis 34 auf den unterschiedlichen Wellen 2, 3, 4 nutzt im übrigen optimal den im Gehäuse 50 vorhandenen Raum, so daß die Getriebeanordnung besonders kompakt baut.

## Patentansprüche

1. Getriebeanordnung für insbesondere landwirtschaftliche Geräte mit einer Antriebswelle (1) und zumindest zwei Abtriebswellen (3,4), die dergestalt mit der Antriebswelle (1) verbunden sind, daß die Abtriebswellen (3,4) sowohl mit abweichenden, als auch mit übereinstimmenden Geschwindigkeiten antreibbar sind, und bei dem zumindest eine Abtriebswelle (3,4) über ein Lastschaltgetriebe regelbar mit der Antriebswelle (1) verbunden ist, **dadurch gekennzeichnet, daß** das Lastschaltgetriebe als gestuftes Getriebe mit mindestens drei über eine Schaltvorrichtung wählbaren Gängen ausgestaltet ist, wobei wenigstens zwei Gänge durch Überlastsicherungen beinhaltende Lamellenkupplungen (31,32) und mindest ein weiterer Gang durch einen Freilauf (29) gebildet sind und wobei die Schaltvorrichtung so aufgebaut ist, daß sie eine Freiposition einnehmen kann, in der keine der Kupplungen (31,32) im Eingriff ist.

2. Getriebeanordnung nach Anspruch 1, **dadurch gekennzeichnet, daß** für jeden Abtrieb eine separate Überlastsicherung vorhanden ist.

3. Getriebeanordnung nach einem der vorhergehenden Ansprüche, **dadurch gekennzeichnet, daß** für jede Getriebestufe eine separate Überlastsicherung vorhanden ist.

4. Getriebeanordnung nach einem der vorhergehenden Ansprüche, **gekennzeichnet durch** einen Aufbau der Schaltvorrichtung derart, daß nach Abschluß eines Schaltvorgangs die gewählte Schaltposition kraftfrei oder kraftarm gehalten wird.

5. Getriebeanordnung nach einem der vorhergehenden Ansprüche, **dadurch gekennzeichnet, daß** die Schaltvorrichtung ein Schaltelement aufweist, über das zumindest eine Schaltkugel (9) an wenigstens einer gegenüber der Schaltrichtung (S) geneigten Fläche (15) entlangbewegbar ist.

6. Getriebeanordnung nach Anspruch 5, **dadurch gekennzeichnet, daß** das Schaltelement ein Schaltring (7) mit abgeschrägten Flanken (8) ist.

7. Getriebeanordnung nach Anspruch 5 oder 6, **dadurch gekennzeichnet, daß** die Schaltkugel (9) durch ein Halteelement (19) gegen Herausfallen gesichert ist.

8. Getriebeanordnung nach einem der vorhergehenden Ansprüche, **dadurch gekennzeichnet, daß** die regelbare Abtriebswelle (3) über eine Zwischenwellenanordnung (2,6) mit der Antriebswelle (1) verbunden ist.

9. Getriebeanordnung nach Anspruch 8, **dadurch gekennzeichnet, daß** die Zwischenwellenanordnung (2,6) eine Schaltwelle (6) aufweist, die mit den Abtriebswellen (3,4) fluchtet.

10. Getriebeanordnung nach einem der vorhergehenden Ansprüche, **gekennzeichnet durch** eine Übertragungswelle (2), die ein auf die Abtriebswelle (4) wirkendes Zahnrad (14) und zumindest zwei verschiedene auf die regelbare Abtriebswelle (3) wirkende Zahnräder (11,12,13) trägt.

11. Getriebeanordnung nach Anspruch 9 und 10, **dadurch gekennzeichnet, daß** die auf die regelbare Abtriebswelle (3) wirkenden Zahnräder (11,12,13) mittelbar über die Schaltwelle (6) wirken.

12. Getriebeanordnung nach Anspruch 10 oder 11, **dadurch gekennzeichnet, daß** zumindest zwischen einem (13) der auf die regelbare Abtriebswelle (3) wirkenden Zahnräder (11,12,13) und der Abtriebswelle (3) der Freilauf (29) zwischengeschaltet ist.

13. Getriebeanordnung nach Anspruch 12, **dadurch gekennzeichnet, daß** der Freilauf (29) durch eine Überlastsicherung (33) abgesichert ist.

14. Getriebeanordnung nach einem der Ansprüche 2, 3 oder 13, **dadurch gekennzeichnet, daß** die Überlastsicherung(en) (33 und/oder 34) durch Lamellenpakete gebildet ist (sind).

## Claims

1. Gearbox arrangement particularly for agricultural equipment, having an input shaft (1) and having at least two output shafts (3, 4) which are connected to the input shaft (1) in such a way that the output shafts (3, 4) are able to be driven both at different speeds and at matching speeds, and in which at least one output shaft (3, 4) is connected to the input shaft (1) in a regulatable manner by means of power-shift gearing, **characterised in that** the power-shift gearing takes the form of multi-step gearing having at least three speeds which can be selected via a shift arrangement, at least two speeds being formed by multi-disc clutches (31, 32) including anti-overload safety means and at least one further speed being formed by a free-wheel (29), and the shift arrangement being so constructed that it is able to assume a free position in which none of the clutches (31, 32) is engaged.

2. Gearbox arrangement according to claim 1, **characterised in that** a separate anti-overload safety means is present for each output.

3. Gearbox arrangement according to either of the foregoing claims, **characterised in that** a separate anti-load safety means is present for each step of the gearing.

4. Gearbox arrangement according to one of the foregoing claims, **characterised by** a construction for the shift arrangement such that on completion of a shifting operation the shifted position which has been selected is held with no force or little force.

5. Gearbox arrangement according to one of the foregoing claims, **characterised in that** the shifting arrangement has a shifting member by means of which at least one shifting ball (9) can be moved along at least one surface (15) which is inclined to the direction of shift (S).

6. Gearbox arrangement according to claim 5, **characterised in that** the shifting member is a shifting ring (7) having bevelled flanks (8).

7. Gearbox arrangement according to claim 5 or 6, **characterised in that** the switching ball (9) is held from dropping out by a retaining member (19).

8. Gearbox arrangement according to one of the foregoing claims, **characterised in that** the regulatable output shaft (3) is connected to the input shaft (1) via an arrangement (2, 6) of intermediate shafts.

9. Gearbox arrangement according to claim 8, **characterised in that** the arrangement (2, 6) of intermediate shafts has a shifting shaft (6) which is in line with the output shaft (3, 4).

10. Gearbox arrangement according to one of the foregoing claims, **characterised by** a transfer shaft (2) which has a gear (14) which acts on the output shaft (4) and at least two different gears (11, 12, 13) which act on the regulatable output shaft (3).

11. Gearbox arrangement according to claim 9 or 10, **characterised in that** the gears (11, 12, 13) which act on the regulatable output shaft (3) act indirectly via the shifting shaft (6).

12. Gearbox arrangement according to claim 10 or 11, **characterised in that** the freewheel (29) is inserted at least between one (13) of the gears (11, 12, 13) which act on the regulatable output shaft (3) and the output shaft (3).

13. Gearbox arrangement according to claim 12, **characterised in that** the freewheel (29) is safeguarded by an anti-overload safety means (33).

14. Gearbox arrangement according to one of claims 2, 3 or 13, **characterised in that** the anti-overload safety means (33 and/or 34) is/are formed by packs of clutch discs.

## Revendications

1. Transmission notamment pour des machines agricoles comportant un arbre d'entraînement (1) et au moins deux arbres entraînés (3, 4) reliés à l'arbre d'entraînement (1) de façon que les arbres entraînés (3, 4) puissent être entraînés à des vitesses différentes mais aussi à des vitesses concordantes et au moins un arbre entraîné (3, 4) est relié à l'arbre d'entraînement (1) de manière réglable par l'intermédiaire d'une boîte de vitesses à commutation en charge.
**caractérisée en ce que**
la boîte de vitesses à commutation en charge est une boîte de vitesses à rapports ayant au moins trois rapports de vitesses qui peuvent être sélectionnés par un dispositif de sélection,
au moins deux des rapports de vitesses sont formés par des embrayages à lamelles (31, 32) comportant des protections de surcharge et au moins un autre rapport est formé par une roue libre (29), et
le dispositif de commutation est réalisé pour qu'il puisse prendre une position libre dans laquelle aucun des embrayages (31, 32) est en prise.

2. Transmission selon la revendication 1,
**caractérisée par**
une protection de surcharge distincte pour chaque sortie.

3. Transmission selon les revendications précédentes,
**caractérisée par**
une protection de surcharge distincte pour chaque étage de la boîte de vitesses.

4. Transmission selon les revendications précédentes,
**caractérisée par**
une construction du dispositif de commutation de façon qu'à la fin d'une opération de commutation, la position commutée, sélectionnée soit maintenue sans avoir à exercer de force ou seulement une faible force.

5. Transmission selon les revendications précédentes,
**caractérisée en ce que**
le dispositif de commutation comporte un élément de commutation qui permet de déplacer au moins une bille de commutation (9) sur au moins une surface (15) inclinée par rapport à la direction de commutation (S).

6. Transmission selon la revendication 5,
**caractérisée en ce que**
l'élément de commutation est une bague de commutation (7) munie de flancs inclinés (8).

7. Transmission selon la revendication 5 ou 6,
**caractérisée en ce que**
la bille de commutation (9) est protégée contre son éjection par un élément de retenue (19).

8. Transmission selon les revendications précédentes,
**caractérisée en ce que**
l'arbre entraîné (3), réglable, est relié à l'arbre d'entraînement (1) par un montage d'arbres intermédiaires (2, 6).

9. Transmission selon la revendication 8,
**caractérisée en ce que**
le montage d'arbres intermédiaires (2, 6) comporte un arbre de commutation (6) aligné sur les arbres entraînés (3, 4).

10. Transmission selon les revendications précédentes,
**caractérisée par**
un arbre de transmission (2) portant une roue dentée (14) coopérant avec l'arbre entraîné (4) et au moins deux roues dentées (11, 12, 13) agissant différemment sur l'arbre entraîné (3), réglable.

11. Transmission selon les revendications 9 et 10,
**caractérisée en ce que**
les roues dentées (11, 12, 13) coopérant avec l'arbre entraîné (3), réglable, agissent par l'intermédiaire de l'arbre de commutation (6).

12. Transmission selon la revendication 10 ou 11,
**caractérisée en ce que**
la roue libre (29) est montée entre l'une (13) des roues dentées (11, 12, 13) agissant sur l'arbre entraîné (3), réglable, et l'arbre entraîné (3).

13. Transmission selon la revendication 12,
**caractérisée en ce que**
la roue libre (29) est protégée par un dispositif de protection de surcharge (33).

14. Transmission selon les revendications 2, 3 ou 13,
**caractérisée en ce que**
le ou les dispositif(s) de protection de surcharge (33 et/ou 34) est (sont) constitué(s) par des paquets de lamelles.
